# EUROPÄISCHE PATENTSCHRIFT

(11) **EP 0 831 007 B1**
(45) Veröffentlichungstag und Bekanntmachung des Hinweises auf die Patenterteilung: **20.08.2003**
(21) Anmeldenummer: 97114670.9
(22) Anmeldetag: 25.08.1997
(51) Int. Cl.: B61L 27/00

(54) **Zugortungssystem**
Train locating system
Système de localisation des trains

(30) Priorität: 05.09.1996 DE 19636108
(43) Veröffentlichungstag der Anmeldung: 25.03.1998
(73) Patentinhaber: SIEMENS AKTIENGESELLSCHAFT, 80333 München (DE)
(72) Erfinder: Kiriczi, Sven, Dr., 91052 Erlangen (DE)

(56) Entgegenhaltungen:
- EP-A- 0 451 520
- DE-A- 4 142 403
- DE-A- 4 335 818
- DE-A- 4 439 768
- DE-A- 19 501 879

## Beschreibung

Die Erfindung betrifft ein Verfahren zur satellitengestützten Zugortung sowie eine Einrichtung zur Durchführung dieses Verfahrens.

Für die Steuerung von Fahrzeugen, wie z. B. Zügen oder Kraftwagen, ist es notwendig, die Position dieser Fahrzeuge zu kennen. Es ist bekannt, diese z. B. mit satellitengestützten Ortungssystemen zu bestimmen. Handelt es sich um Fahrzeuge, deren Bremsweg derartig kurz ist, daß der Punkt, an dem das Fahrzeug zum Stillstand kommen kann, im Sichtbereich des das Fahrzeug operierenden Personals liegt, so kommt der Positionsbestimmung des Fahrzeugs im allgemeinen keine Sicherheitsverantwortung zu. Liegt dieser Punkt dagegen außerhalb des Sichtfeldes des das Fahrzeug operierenden Personals, wie es z. B. bei Zügen ab einer bestimmten kritischen Geschwindigkeit der Fall ist, ist die Ortungsinformation sicherheitskritisch. In einem derartigen Fall wird auf sogenannte elektrische Sicht gefahren, wobei durch ein entsprechendes Zugsicherungssystem überprüft wird, ob das Fahrzeug noch vor einem möglichen Gefahrenpunkt auf der Strecke zum Stehen kommen kann. Das entsprechende Zugsicherungssystem muß dazu die Position des Zuges hinreichend genau kennen. Da die Satelliten für satellitengestützte Navigationssysteme nicht dem Einfluß der Bahnverwaltungen unterliegen, sind systematische Ortungsfehler, z. B. durch bewußte Informationsveränderung, nicht auszuschließen. Darüber hinaus gibt es weitere Ortungsfehler, insbesondere als Folge ionosphärischer und atmosphärischer Einflüsse, die bislang den Einsatz von Satellitenortung in sicherheitsgerichteten Anwendungen verhindern. Satellitenortung wird im Bahnwesen bislang lediglich für nicht sicherheitsgerichtete Anwendungen eingesetzt wie z. B. zur Disposition von Güterwagen oder für Fahrgastinformationssysteme.

Aus der DE 41 36 136 Cl ist ein System zur satellitengestützten Positionsbestimmung von beweglichen Objekten, insbesondere Fahrzeugen, bekannt, bei dem die nicht vermeidbaren Fehler der Satellitenortung für die Positionsbestimmung der Fahrzeuge dadurch in Grenzen gehalten werden sollen, dass die ermittelten Fahrzeugpositionen mit einem Korrekturwert beaufschlagt werden. Dieser Korrekturwert wird dadurch bestimmt, dass über Satellitenortung die Position eines ortsfesten Referenzempfängers bestimmt und mit seiner bekannten tatsächlichen Position im Koordinatensystem der Satellitenortung verglichen wird. Die Abweichung zwischen ermittelter und tatsächlicher Position des Referenzempfängers bestimmt den Korrekturwert, der die ermittelte Position auf die tatsächliche Position nachführt. Dieser Korrekturwert gilt in gleicher Weise auch für die durch Satellitenortung ermittelten Fahrzeugpositionen, jedenfalls dann, wenn sich die Fahrzeuge im Nahbereich des Referenzempfängers befinden und wenn für die Satellitenortung der Fahrzeuge die gleichen Satelliten herangezogen werden wie für den Referenzempfänger. Mit zunehmendem Abstand zwischen dem Referenzempfänger und den Fahrzeugen, deren gegenwärtige Position bestimmt werden soll, steigt aber die Wahrscheinlichkeit, dass an der Positionsbestimmung des Referenzempfängers und der Positionsbestimmung der Fahrzeuge unterschiedliche Satelliten beteiligt sind. Die im Zusammenhang mit einem Referenzempfänger ermittelten Korrekturwerte haben dann keine hinreichende Gültigkeit für die Fahrzeugortung.

Die Positionsbestimmung unter Verwendung von Korrekturwerten durch Referenzempfänger setzt zwingend bei allen Fahrzeugempfängern eine zusätzliche Datenverarbeitung für die Positionskorrektur voraus. Von Nachteil bei dem bekannten Prinzip der Ortungskorrektur ist ferner, dass auch Satelliten, deren Ortungsinformationen zu einer ausgeprägten Verfälschung des Ortungsergebnisses führen, für die Fahrzeugortung weiterhin verwendet werden.

Aufgabe der Erfindung ist es, ein Verfahren zur Zugortung anzugeben, das es ermöglicht, kommerzielle und damit wenig aufwendige satellitengestützte Ortungssysteme auch für sicherheitskritische Anwendungen des Bahnbetriebs einzusetzen. Es ist ferner Aufgabe der Erfindung, eine Einrichtung zur Durchführung dieses Verfahrens anzugeben.

Die Aufgabe wird erfindungsgemäß durch ein Verfahren gemäß Anspruch 1 bzw. Anspruch 3 gelöst. Durch den Einsatz eines Referenzempfängers, dessen Position bekannt ist, ist es möglich, Satelliten mit unzulässigen Abweichungen in den Ortungsinformationen zu erkennen. Dabei wird in an sich bekannter Weise die Position des Referenzempfängers aus einer Auswahl der von den Satelliten ausgesendeten und zur Ortung verwendeten Informationen ermittelt und die so ermittelte Position des Referenzempfängers mit der bekannten tatsächlichen Position des Referenzempfängers verglichen. Weicht die auf der Basis der von den Satelliten ausgesendeten Informationen ermittelte Position des Referenzempfängers von der tatsächlichen Position des Referenzempfängers um mehr als einen vorgegebenen Toleranzwert ab, so wird ein Fehleridentifizierungssignal erzeugt, das die Satelliten kennzeichnet, die korrekte Informationen liefern, d. h. deren Verwendung zur Bestimmung einer Position des Referenzempfängers führt, die von der tatsächlichen Position des Referenzempfängers nicht um mehr als den Toleranzwert abweicht. Alternativ dazu kann das Fehleridentifizierungssignal auch die komplementäre Information tragen, d. h. die Satelliten kennzeichnen, die keine korrekten Informationen liefern, d. h. deren Verwendung zur Bestimmung einer Position des Referenzempfängers führt, die von der tatsächlichen Position des Referenzempfängers um mehr als den Toleranzwert abweicht.

Nach der Erfindung ist vorgesehen, daß die Position des Referenzempfängers mittels mehrerer Kombinationen von Informationen unterschiedlicher Satelliten mehrfach ermittelt wird, wobei jeder Satellit Teil zumindest zweier unterschiedlicher Kombinationen ist, und wobei ein Fehlerdetektionssignal erzeugt wird, wenn die auf der Basis der zur Ortung verwendbaren Informationen ermittelte Position des Referenzempfängers für eine Kombination von Information unterschiedlicher Satelliten von der bekannten tatsächlichen Position des Referenzempfängers um mehr oder um nicht mehr als einen Toleranzwert abweicht. Auf diese Weise ist es möglich, in vorteilhafter Ausgestaltung mittels eines Bewerters, aus den Fehlerdetektionssignalen ein Fehleridentifizierungssignal zu erzeugen, das die Satelliten kennzeichnet, die korrekte Informationen liefern, d. h. deren Verwendung zur Bestimmung einer Position des Referenzempfängers führt, die von der bekannten Position des Referenzempfängers um nicht mehr als den Toleranzwert abweicht. Dieses Vorgehen ermöglicht es, einzelne Satelliten zu identifizieren, die fehlerhafte zur Ortung verwendbare Informationen liefern.

Die Züge weisen einen Empfänger auf, mittels dessen die zur Ortung verwendbaren Informationen der Satelliten empfangen werden können. Aus einer Auswahl dieser Information, d. h. einer Auswahl von Satelliten, wird dann auf dem Zug die Zugposition ermittelt. Damit dieses auf der Basis von zulässigen Informationen erfolgt, wird die Information, welche Satelliten korrekte Informationen liefern, d. h. das Fehleridentifizierungssignal, an die entsprechenden Züge übermittelt. Diese Informationsübertragung erfolgt dabei vorteilhafterweise signaltechnisch sicher, da die Information, welche Satelliten korrekte Informationen liefern, sicherheitskritisch ist.

In einer weiteren vorteilhaften Ausgestaltung der Erfindung wird festgelegt, daß ein über die Satellitenortung ermittelter Meßwert nicht als absoluter Wert angegeben werden kann, sondern nur als ein signaltechnisch sicheres Intervall.

Es ist bereits bekannt (DE 44 25 969 C1), in satellitengestützten Ortungssystemen ermittelte Ortungsergebnisse mit einer Störmeldung zu versehen, wenn feststeckt, daß diese Ortungsergebnisse nicht stimmen können. Zu diesem Zweck wird ein einmal ermitteltes, als korrekt anerkanntes Ortungsergebnis unter Maßgabe einer maximalen Vorrückgeschwindigkeit des Zuges fortgeschrieben und dann dieses fortgeschriebene Ortungsergebnis mit einem neuen Ortungsergebnis verglichen. Kann dieses neue Ortungsergebnis nicht wahr sein, weil es um einen unzulässigen Toleranzwert vom fortgeschriebenen Ortungsergebnis abweicht, wird das aktuelle Ortungsergebnis verworfen. Es findet keine Festlegung auf andere Satelliten statt, die an dem aktuellen Ortungsergebnis nicht beteiligt waren.

Weitere Vorteile und erfindungsgemäße Einzelheiten ergeben sich aus der nachfolgenden Beschreibung von Ausführungsbeispielen, anhand der Zeichnungen und in Verbindung mit den Unteransprüchen. Im einzelnen zeigen:
**Fig.** 1 ein erfindungsgemäßes Zugortungssystem,
**Fig.** 2 ein erfindungsgemäßes Zugortungssystem,
**Fig.** 3 eine Struktur zur Identifizierung fehlerhafter Ortungsinformationen.

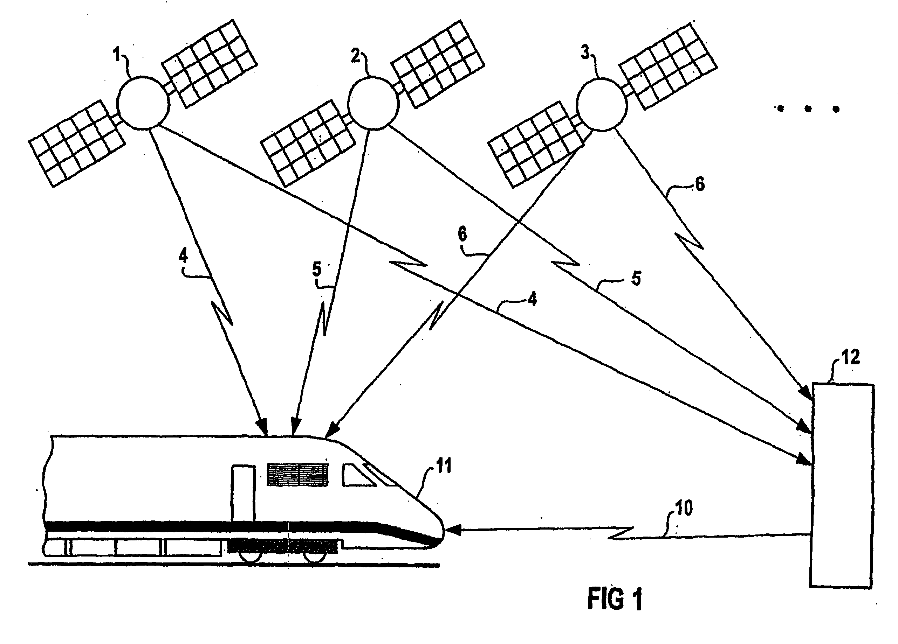

**Fig.** 1 zeigt ein erfindungsgemäßes Zugortungssystem; das Zugortungssystem ist Teil eines Zugsicherungssystems zur Steuerung einer Bahnanlage. Von einem Zug **11,** dessen Position bestimmt werden soll, werden die zur Ortung verwendbaren Informationen **4, 5, 6,** die von entsprechenden Ortungssatelliten **1, 2, 3** ausgesendet werden, empfangen. Die Ortungsinformationen **4, 5, 6** der Satelliten **1, 2, 3** werden ebenfalls von einem Referenzempfänger **12** empfangen. Aus den Ortungsinformationen **4, 5, 6,** die vom Referenzempfänger **12** empfangen werden, wird der Ort des Referenzempfängers **12** ermittelt. Der tatsächliche Ort des Referenzempfängers **12** ist bekannt. Aus den Ortungsinformationen **4, 5, 6** läßt sich der Ort des Referenzempfängers **12** bestimmen; dieser wird mit dem tatsächlichen Ort des Referenzempfängers **12** verglichen. Durch diesen Vergleich werden die Satelliten identifiziert, deren Ortungsinformationen zur Ortung ungeeignet sind, weil sie zu Ortungsergebnissen außerhalb eines vorgegebenen Toleranzbereiches um die tatsächliche Position des Referenzempfängers führen. Die Kennungen der Satelliten, die korrekte Ortungsinformationen liefern, werden dem Zug **11** über eine entsprechende Kommunikationsverbindung **10** übertragen. Ein entsprechendes Ortungssystem auf dem Zug **11** ermittelt aus den korrekten Ortungsinformationen, d. h. den Ortungsinformationen der Satelliten, die zu einer hinreichend genauen Ortung des Referenzempfängers geführt haben, die Position des Zuges **11.** Eine Korrektur der ermittelten Fahrzeugposition auf dem Zuge ist nicht erforderlich.

Die Satelliten, deren Ortungsinformationen vom Zug **11** empfangen werden, sind nicht notwendigerweise alle gleich den Satelliten, deren Ortungsinformationen vom Referenzempfänger **12** empfangen werden. Sofern die Möglichkeit besteht, daß es Satelliten gibt, deren Ortungsinformation zwar vom Zug **11,** nicht aber vom Referenzempfänger **12** empfangen werden, ist es vorteilhaft, mehrere Referenzempfänger an verschiedenen Orten so zu plazieren, daß alle Satelliten, deren Ortungsinformationen von einem Zug **11** im Streckennetz empfangen werden können, auf ihre Korrektheit hin überprüft werden können.

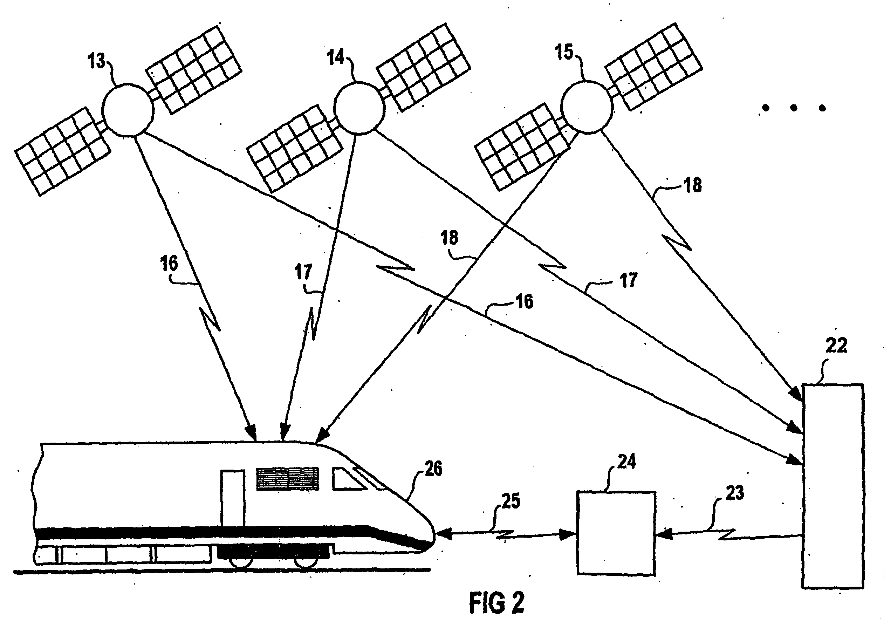

**Fig.** 2 zeigt ein erfindungsgemäßes Zugortungssystem in detaillierterer Ausgestaltung. Dabei werden von einem Zug **26,** dessen Position bestimmt weiden soll, die zur Ortung verwendbaren Informationen **16, 17, 18,** die von entsprechenden Ortungssatelliten **13, 14, 15** ausgesendet werden, empfangen. Die Ortungsinformationen **16, 17, 18** der Satelliten **13, 14, 15** werden ebenfalls von einem Referenzempfänger **22** empfangen. Aus den Ortungsinformationen **16, 17, 18,** die vom Referenzempfänger **22** empfangen werden, ermittelt dieser seine Position. Sein tatsächlicher Ort des Referenzempfängers **22** ist ihm bekannt. Er vergleicht den aus den Ortungsinformationen **16, 17, 18** ermittelten Ort mit dem tatsächlichen Ort. Aus diesem Vergleich identifiziert er die Satelliten, deren Ortungsinformationen für die Ortung ungeeignet sind. Die Information, welche Satelliten korrekte Ortungsinformationen liefern, werden vom Referenzempfänger **22** über eine Kommunikationsverbindung **23** an eine Zentrale **24** übertragen, die den Lauf der Züge **26** auf der Strecke koordiniert. Alternativ dazu empfängt die Zentrale **24** die aus den Ortungsinformationen **16, 17, 18** ermittelte Position des Referenzempfängers **22,** wobei der Vergleich mit der tatsächlichen Position des Referenzempfängers **22** in der Zentrale erfolgt. Über eine Kommunikationsverbindung **25,** über die der Informationsaustausch zwischen Zug **26** und Zentrale **24** erfolgt, wird dem Zug **26** mitgeteilt, welche Satelliten korrekte Ortungsinformationen liefern. Der Zug ermittelt aus den Ortungsinformationen dieser Satelliten seine gegenwärtige Position.

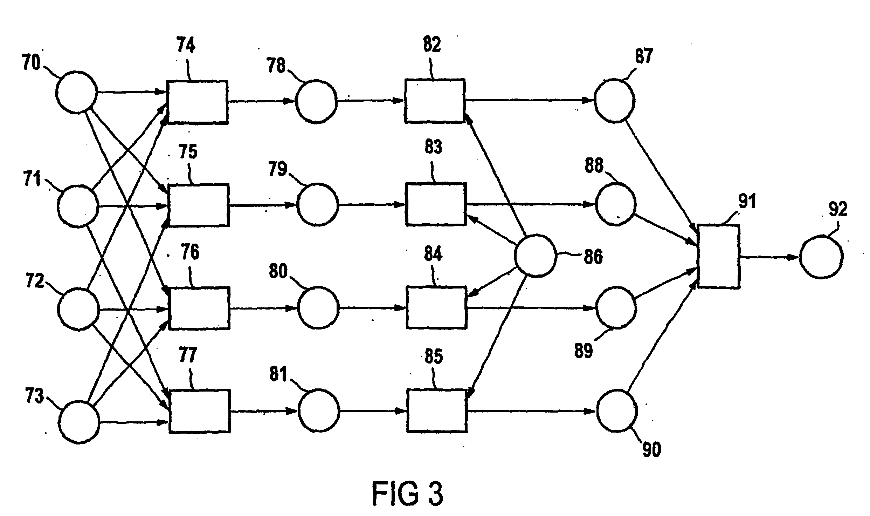

**Fig. 3** zeigt eine Struktur zur Identifizierung fehlerhafter Ortungsinformationen. Dabei bezeichnen Bezugszeichen **70, 71, 72** und **73** Ortungsinformationen, die von verschiedenen Satelliten ausgesandt werden. Im vorliegenden Beispiel sind die Ortungsinformationen **70, 71, 72, 73** dreier Satelliten für eine Positionsbestimmung des Referenzempfängers oder eines Zuges notwendig. Im vorliegenden Beispiel werden vom Referenzempfänger die Ortungsinformation **70, 71, 72, 73** empfangen. Gemäß dem vorliegenden Ausführungsbeispiel werden zunächst je drei Ortungsinformationen der vier Ortungsinformationen **70, 71, 72, 73** Positionsbestimmungen **74, 75, 76, 77** zugeführt, die die Position **78, 79, 80, 81** des Referenzempfängers ermitteln. Diese wird zusammen mit der tatsächlichen Position **86** des Referenzempfängers je einem Vergleicher **82, 83, 84, 85** zugeführt. Der Vergleicher **82, 83, 84, 85** vergleicht die beiden Orte und gibt ein Fehlerdetektionssignal aus. Weichen die Position **86** des Referenzempfängers und die aus Ortungsinformation ermittelte Position **78, 79, 80, 81** des Referenzempfängers um mehr als einen vorgegebenen Toleranzwert ab, so signalisiert das Fehlerdetektionssignal **87, 88, 89, 90,** das in der entsprechenden Kombination von Ortungsinformationen fehlerhafte Ortungsinformationen enthalten ist. Die Fehlerdetektionssignale **87, 88, 89, 90** werden einem Bewerter **91** zugeführt, der die fehlerhafte Ortungsinformation identifiziert und ein entsprechendes Fehleridentifizierungssignal **92** ausgibt, aus dem hervorgeht, welche der Ortungsinformationen fehlerhaft ist.

## Patentansprüche

1. Verfahren zur satellitengestützten Zugortung, bei dem die Position eines Zuges **(11)** aus den Ortungsinformationen **(4, 5, 6)** mehrerer Satelliten **(1, 2, 3)** ermittelt wird,
indem zunächst die Position eines ortsfesten Referenzempfängers **(12)** per Satellitenortung ermittelt wird,
die so ermittelte Position **(78)** des Referenzempfängers **(22)** mit der bekannten tatsächlichen Position **(86)** des Referenzempfängers verglichen und geprüft wird, ob die Abweichung der so ermittelten Position des Referenzempfängers von seiner tatsächlichen Position um mehr oder nicht um mehr als einen vorgegebenen Toleranzwert abweicht,
indem die Position **(78, 79, 80, 81)** des Referenzempfängers **(22)** mehrfach ermittelt wird unter Verwendung von Ortungsinformationen **(70, 71, 72, 73)** unterschiedlicher Kombinationen von Satelliten,
wobei jeder Satellit Teil zumindest zweier derartiger Kombinationen von Satelliten ist,
indem für jede dieser Kombinationen von Satelliten ein Fehlerdetektionssignal **(87, 88, 89, 90)** erzeugt wird, das angibt, ob die jeweils ermittelte Position **(78, 79, 80, 81)** des Referenzempfängers um mehr als den vorgegebenen Toleranzwert von seiner tatsächlichen Position **(86)** abweicht,
indem aus den Fehlerdetektionssignalen **(87, 88, 89, 90**) ein Fehleridentifizierungssignal **(92)** erzeugt wird, das den oder die Satelliten bezeichnet, deren Ortungsinformationen zur Bestimmung einer Position (**78, 79, 80, 81**) des Referenzempfängers geführt haben, die um mehr oder nicht um mehr als den vorgegebenen Toleranzwert von seiner tatsächlichen Position **(86)** abweicht,
indem das Fehleridentifizierungssignal dazu verwendet wird, diejenigen Satelliten zu bezeichnen, deren Ortungsinformationen zu einer nicht um mehr als den vorgegebenen Toleranzwert von seiner tatsächlichen Position abweichenden Position des Referenzempfängers geführt haben
und indem die Ortungsinformationen nur dieser Satelliten zur Positionsbestimmung des Zuges zugelassen werden.

2. Verfahren nach Anspruch 1, **dadurch gekennzeichnet, dass** die durch Satellitenortung für einen Zug **(26)** ermittelte Position auf ein signaltechnisch sicheres Intervall aufgeweitet wird.

3. Einrichtung zur Durchführung des Verfahrens nach Anspruch 1 oder 2, **dadurch gekennzeichnet, daß** mindestens ein ortsfester Referenzempfänger **(22)** sowie mindestens ein Empfänger auf einem Zug **(26)** zum Empfangen der Ortungsinformationen **(16, 17, 18)** mehrerer Satelliten **(13, 14, 15)** vorgesehen ist, daß der Referenzempfänger **(22)** oder eine Zentrale **(24)** mittels Vergleichern **(82** bis **85)** prüft, ob eine über die Satellitenortung bestimmte Position **(78)** des Referenzempfängers um mehr oder nicht um mehr als einen vorgegebenen Toleranzwert von seiner bekannten tatsächlichen Position **(86)** abweicht, und daß ein Bewerter **(91)** vorgesehen ist, der aus den Ergebnissignalen der Vergleicher diejenigen Satelliten bestimmt, die zu Ortungsergebnissen für den Referenzempfänger geführt haben, die um mehr oder nicht mehr als einen vorgegebenen Toleranzwert von seiner tatsächlichen Position **(86)** abweichen und der dieses Prüfergebnis an den Zug übermittelt.

4. Einrichtung nach Anspruch 3, **dadurch gekennzeichnet, dass** zwischen dem Referenzempfänger **(22)** und einem Zug **(26)** oder zwischen dem Referenzempfänger und der Zentrale **(24)** sowie dieser und dem Zug eine signaltechnisch sichere Informationsübertragung vorgesehen ist.

## Claims

1. Satellite-supported train locating method in which the position of a train (11) is determined from the locating information (4, 5, 6) of a plurality of satellites (1, 2, 3), in that the position of a locationally fixed reference receiver (12) is firstly determined by means of a satellite-supported locating system, the position (78) of the reference receiver (22) which is determined in this way is compared with the known actual position (86) of the reference receiver and it is checked whether the position of the reference receiver which is determined in this way deviates from its actual position by more than, or by not more than, a predefined tolerance value, in that the position (78, 79, 80, 81) of the reference receiver (22) is determined repeatedly using locating information (70, 71, 72, 73) of different combinations of satellites, each satellite being part of at least two such combinations of satellites, in that an error detection signal (87, 88, 89, 90) which indicates whether the respectively determined position (78, 79, 80, 81) of the reference receiver deviates from its actual position (86) by more than the predefined tolerance range is generated for each of these combinations of satellites, in that an error identification signal (92) which designates the satellite or satellites whose locating information has led to the determination of a position (78, 79, 80, 81) of the reference receiver which deviates from its actual position (86) by more than, or by not more than, the predefined tolerance value is generated from the error detection signals (87, 88, 89, 90), in that the error identification signal is used to designate those satellites whose locating information has led to a position of the reference receiver which does not deviate from its actual position by more than the predefined tolerance value and in that the locating information of only these satellites is permitted for the determination of the position of the train.

2. Method according to Claim 1, **characterized in that** the position which is determined for a train (26) by means of a satellite-supported locating system is extended over an interval which is reliable in terms of signalling technology.

3. Device for carrying out the method according to Claim 1 or 2, **characterized in that** at least one locationally fixed reference receiver (22) and at least one receiver are provided on a train (26) for receiving the locating information (16, 17, 18) of a plurality of satellites (13, 14, 15), **in that** the reference receiver (22) or a control centre (24) checks, by means of comparators (82 to 85), whether or not a position (78) of the reference receiver which is determined by means of the satellite-supported locating system deviates from its known actual position (86) by more than, or by not more than, a predetermined tolerance value, and **in that** an evaluator (91) is provided which determines, from the result signals of the comparators, those satellites which have led to locating results for the reference receiver which deviate from its actual position (86) by more than, or by not more than, a predefined tolerance value, and which transmits this check result to the train.

4. Device according to Claim 3, **characterized in that** a transmission of information which is reliable in terms of signalling technology is provided between the reference receiver (22) and a train (26) or between the reference receiver and the control centre (24) as well as between the latter and the train.

## Revendications

1. Procédé de localisation de train par satellite dans lequel on détermine la position d'un train (11) à partir des informations de localisation (4, 5, 6) de plusieurs satellites (1, 2, 3), dans lequel
on détermine d'abord la position d'un récepteur de référence stationnaire (12) au moyen d'une localisation par satellite,
on compare la position ainsi déterminée (78) du récepteur de référence (22) à la position réelle connue (86) du récepteur de référence et on teste si l'écart entre la position ainsi déterminée du récepteur de référence et sa position réelle est supérieur ou inférieur à une valeur de tolérance prédéterminée,
on détermine plusieurs fois la position (78, 79, 80, 81) du récepteur de référence (22) en utilisant des informations de localisation (70, 71, 72, 73) de différentes combinaisons de satellites, chaque satellite faisant partie d'au moins deux combinaisons de satellites de ce type,
pour chacune de ces combinaisons de satellites, on produit un signal de détection d'erreur (87, 88, 89, 90) qui indique si la position respectivement déterminée (78, 79, 80, 81) du récepteur de référence s'écarte de sa position réelle (86) de plus de la valeur de tolérance prédéterminée,
à partir des signaux de détection d'erreur (87, 88, 89, 90), on produit un signal d'identification d'erreur (92) qui désigne le ou les satellites dont les informations de localisation ont conduit à la détermination d'une position (78, 79, 80, 81) du récepteur de référence qui s'écarte de sa position réelle (86) de plus ou de pas plus de la valeur de tolérance prédéterminée,
on utilise le signal d'identification d'erreur pour désigner les satellites dont les informations de localisation ont conduit à une position du récepteur de référence qui ne s'écarte pas de sa position réelle de plus de la valeur de tolérance prédéterminée,
et on n'autorise les informations de localisation que de ces satellites pour la détermination de position du train.

2. Procédé selon la revendication 1, **caractérisé par le fait que** la position déterminée par localisation par satellite pour un train (26) est élargie à un intervalle sûr du point de vue de la technique des signaux.

3. Dispositif pour la mise en oeuvre du procédé selon la revendication 1 ou 2, **caractérisé par le fait qu'**il est prévu au moins un récepteur de référence stationnaire (22) ainsi qu'au moins un récepteur sur un train (26) pour la réception des informations de localisation (16, 17, 18) de plusieurs satellites (13, 14, 15), le récepteur de référence (22) ou un central (24) teste au moyen de comparateurs (82 à 85) si l'écart entre une position (78) du récepteur de référence déterminée via la localisation par satellite et sa position réelle connue (86) est supérieur ou inférieur à une valeur de tolérance prédéterminée et il est prévu un dispositif d'évaluation (91) qui détermine à partir des signaux de résultat des comparateurs les satellites ayant conduit à des résultats de localisation pour le récepteur de référence qui s'écartent de sa position réelle (86) de plus ou de pas plus d'une valeur de tolérance prédéterminée et qui transmet ce résultat de test au train.

4. Dispositif selon la revendication 3, **caractérisé par le fait qu'**il est prévu entre le récepteur de référence (22) et un train (26) ou entre le récepteur de référence et le central (24) ainsi qu'entre celui-ci et le train une transmission d'information sûre du point de vue de la technique des signaux.
